# EUROPÄISCHE PATENTSCHRIFT

(11) **EP 3 625 886 B1**
(45) Veröffentlichungstag und Bekanntmachung des Hinweises auf die Patenterteilung: **20.01.2021**
(21) Anmeldenummer: 18719553.2
(22) Anmeldetag: 23.04.2018
(51) Int. Cl.: H02P 6/00, H02P 6/182, H02P 6/26, H02P 6/17

(54) **SYNCHRONMASCHINE SOWIE VERFAHREN ZUR SENSORLOSEN DREHZAHLREGELUNG DER SYNCHRONMASCHINE**
SYNCHRONOUS MACHINE AND METHOD FOR REGULATING THE ROTATIONAL SPEED OF THE SYNCHRONOUS MACHINE WITHOUT SENSORS
MACHINE SYNCHRONE ET PROCÉDÉ DE COMMANDE DE VITESSE DE ROTATION SANS CAPTEUR DE LA MACHINE SYNCHRONE

(30) Priorität: 16.05.2017 DE 102017110646
(43) Veröffentlichungstag der Anmeldung: 25.03.2020
(73) Patentinhaber: ebm-papst Mulfingen GmbH & Co. KG, 74673 Mulfingen (DE)
(72) Erfinder: WYSTUP, Ralph, 74653 Künzelsau (DE)
(74) Vertreter: Staeger & Sperling Partnerschaftsgesellschaft mbB
(86) Internationale Anmeldenummer: PCT/EP2018/060308
(87) Internationale Veröffentlichungsnummer: WO 2018/210531

(56) Entgegenhaltungen:
- DE-A1- 10 028 492
- US-A- 6 054 823
- US-A1- 2010 119 386
- US-A1- 2014 125 262

## Beschreibung

Die Erfindung betrifft eine permanenterregte Synchronmaschine sowie ein Verfahren zur sensorlosen Drehzahlregelung einer solchen Synchronmaschine.

Einphasen-Synchronmotoren sind kostengünstig herzustellen und werden vielfach in unterschiedlichen Applikationen eingesetzt. Es ist bekannt, dass ein Einphasen- oder Mehrphasensynchronmotor bzw. eine Synchronmaschine durch an den Anschlussklemmen anliegende Wechselspannung angetrieben werden kann. Wird eine solche Synchronmaschine jedoch über ein bestimmtes Drehmoment hinaus belastet, bleibt sie nach einer gewissen Zeit einfach stehen und/oder läuft aus, was auch als "ein außer Tritt fallen" bezeichnet wird.

Um den Synchronmotor mit vom Versorgungsnetz aufgeprägter Netzfrequenz starten zu können, kann beispielsweise ein Freilauf vorgesehen sein, der zwischen der Motorwelle und dem durch die Motorwelle angetriebenen Element, z. B. dem Lüfterrad oder Pumpenrad zwischengeschaltet ist.

Die mit Permanentmagneten bestückte Motorwelle weist hierzu eine entsprechend niedrige Masse auf, dass sie mit dem Drehfeld des Netzes synchron gestartet werden kann. Nach erfolgter fester magnetischer Kopplung der Motorwelle mit dem Netz-Drehfeld wird durch eine Mitnahmevorrichtung im Freilauf das vom Einphasen-Synchronmotor angetriebene Element von der Drehbewegung erfasst und mitgenommen.

Grundsätzlich hat der Einphasen-Synchronmotor jedoch zwei mögliche Anlaufrichtungen, linksdrehend bzw. rechtsdrehend mit einer Drehrichtungswahrscheinlichkeit von etwa 50% für jede Richtung.

Neben solchen Anwendungsfällen, bei denen die Drehrichtung der Synchronmaschine gleichgültig ist, z. B. bei solchen Pumpen, die bei beiden Drehrichtungen etwa die gleiche Fördereigenschaft besitzen, gibt es auch Anwendungsfälle, bei denen die Drehrichtung des Motors entscheidend ist.

Um die gewünschte Drehrichtung des Einphasen-Synchronmotors beeinflussen zu können, ist es beispielsweise bekannt, das Massenträgheitsmoment, den Freilaufwinkel oder den Lastmomentverlauf über den Drehwinkel derart zu beeinflussen, dass bei richtiger Laufrichtung die auf die Motorwelle wirkende Last so gering ist, dass der Motor möglichst nicht außer Tritt fällt, also der magnetisch in das vom Netz vorgegebene Drehfeld eingekoppelte Rotor auch mit seiner Last in der gleichen Richtung weiterdreht.

Um das "außer Tritt fallen" zu verhindern werden typischerweise Sensoren verbaut, welche die Lage der Rotors erfassen und die Klemmenspannung über die Motorsteuerung entsprechend nachregeln (z. B. mittels feldorientierter Regelung).

Motorsteuerungen und entsprechende Verfahren sind aus dem Stand der Technik umfangreich bekannt. Aus der DE 102016000580 A1 ist z. B. eine Motorstromsteuerung und ein Verfahren zum Steuern des Motorstroms bekannt, die geeignet sind, zum Steuern eines Schrittmotors.

Aus der DE 20103217 U1 ist ein Gebläsemotor mit Frequenzsteuerung zum Erhalt einer konstanten Geschwindigkeit bekannt und insbesondere ein Gebläsemotor, der die Signalfrequenz eines eingehenden Impulses mit der Frequenz eines von einem Gebläse detektierten Signals vergleicht und dann die Ausgangsspannung mit Hilfe einer integrierten Differentialschaltung und eines Differentialverstärkers ändert, so dass die an das Gebläse abgegebene Ausgangsspannung eine glatte Wellenform hat, wodurch das Gebläse präzise auf einer konstanten Geschwindigkeit gehalten wird. US6054823 offenbart die Regelung eines bürstenlosen Motors indem die Kommutationsereignisse ausgewertet werden.

Nachteilig bei den im Stand der Technik bekannten Motoren zur Verhinderung des außer Tritt Fallens ist der Umstand, dass hierzu Sensoren verbaut werden müssen. Speziell bei einphasigen Synchronmotoren ist im Stand der Technik keine alternative Lösung zur sensorgebundenen Motorregelung bekannt.

Aufgabe der vorliegenden Erfindung ist es daher, einen Synchronmotor derart weiterzubilden und ein entsprechendes Verfahren bereit zu stellen, dass eine sensorlose Regelung und insbesondere das außer Tritt Fallen auf einfache und kostengünstige Weise verhindert werden kann.

Diese Aufgabe wird durch die Merkmalskombination gemäß Schutzanspruch 1 gelöst.

Ein Grundgedanke der vorliegenden Erfindung basiert auf dem Anlegen einer Klemmenspannung an die Phasen eines permanenterregten Synchronmotors, welche den Motor synchron dazu drehen lässt, so wie man einen Synchronmotor ohne jegliche Elektronik am Netz mit der Netzfrequenz oder einer Frequenz einer eingebauten Umrichterelektronik drehen lassen kann. Fällt nun dieser Motor infolge zu großen Drehmomente außer Tritt, verlangsamt sich die Rotordrehzahl bis auf den Wert "Null" und der Rotor bleibt demzufolge stehen.

Da der Rotor eines permanenterregten Synchronmotors jedoch Permanentmagnete besitzt, induzieren diese in der Rotorspule beim Auslaufen des Rotors eine Spannung mit einer Frequenz die von der Erregerfrequenz (Frequenz der Erregerspannung) abweicht.

Diese beim außer Tritt geraten des Synchronmotors induzierte Spannung erzeugt folglich im Klemmenstrom eine Frequenzkomponente mit der spezifischen Frequenz des auslaufenden Rotors. Erfindungsgemäß wird nun der Klemmenstrom mit einer Überwachungsvorrichtung auf eine abnehmende Frequenzkomponente hin überwacht. Sobald eine solche abweichende bzw. abnehmende Frequenzkomponente im Frequenzspektrum erfasst wird, welche nicht der Frequenz der anliegenden Klemmenspannung entspricht, kann daraus geschlussfolgert werden, dass der Motor beginnt außer Tritt zu fallen.

Erfindungsgemäß kann dieses Ergebnis entsprechend angezeigt werden oder unmittelbar dazu genutzt werden den Motor wieder einzufangen, indem die Frequenz der Klemmenspannung an die Frequenz des Rotors angepasst wird.

Erfindungsgemäß wird daher eine permanenterregte Synchronmaschine vorgesehen, mit einem Rotor und einem Stator, der mit Anschlussklemmen zum Anlegen einer Netzwechselspannung mit einer Netzfrequenz fo ausgebildet ist, wobei die permanenterregte Synchronmaschine mit einer Motorsteuerung umfassend eine Anordnung zur Erfassung des Klemmenstromes an den Anschlussklemmen und dessen aktuelle Frequenz fₐ ausgebildet ist, wobei ferner ein Analysator oder eine Auswerteeinrichtung vorgesehen ist, um zu ermitteln, ob die aktueller Frequenz eine Frequenzkomponente fr mit einer von der Netzfrequenz abweichenden und insbesondere abnehmenden Frequenz enthält.

In einer bevorzugten Ausführung der Erfindung ist vorgesehen, dass eine Anzeigevorrichtung zur Anzeige einer von der Netzfrequenz oder UmrichterFrequenz abweichenden und/oder abnehmenden Frequenzkomponente vorgesehen ist.

Es ist weiter von Vorteil, wenn die Motorsteuerung ausgebildet ist, abhängig von der ermittelten Frequenzkomponente des Motorstroms die Frequenz der Klemmenspannung zu verändern und insbesondere an die Frequenz des Rotors anzupassen.

Eine Ausgestaltung, bei der die Motorsteuerung ausgebildet ist, die Amplitude der Klemmenspannung abhängig von der ermittelten Frequenzkomponente zu verändern, ist von weiterem Vorteil. Regelmäßig muss nämlich auch noch die Amplitude der Klemmenspannung erhöht werden, da der Motor wegen eines zu hohen Drehmomentes außer Tritt gefallen ist. Wird die Frequenz des Motorstromes permanent überwacht und ggf. angepasst kann der Motor immer in Tritt gehalten werden ohne dass es zusätzlicher Sensoren bedarf.

Besonders vorteilhaft ist die Anwendung des erfinderischen Konzeptes bei einer Einphasen-Synchronmaschine.

Ein weiterer Aspekt der vorliegenden Erfindung betrifft ein Verfahren zum Betrieb einer permanenterregten Synchronmaschine mit den folgenden Schritten:
a. Anlegen einer Netzwechselspannung mit einer Netzfrequenz an die Klemmen der Synchronmaschine zum Antrieb der Maschine,
b. (vorzugsweise permanentes) Überwachen des Klemmenstroms an den Anschlussklemmen und deren aktuelle Frequenz und
c. Ermitteln, ob die aktuelle Frequenz des Motorstroms eine Frequenzkomponente mit einer von der Netzfrequenz oder Umrichterfrequenz abweichenden und insbesondere abnehmenden Frequenz enthält.

In vorteilhafter Weise wird das erfindungsgemäße Verfahren so betrieben, dass eine Anpassung der Frequenz und/oder der Amplitude der Klemmenspannung vorgenommen wird, sobald in Schritt c) eine Frequenzkomponente mit einer von der Netzfrequenz oder Umrichterfrequenz (Speisefrequenz) abweichenden und insbesondere abnehmenden Frequenz detektiert wird. Speziell die Erfassung eines Stromanteils in der Klemmenspannung mit abnehmender Frequenz deutet darauf hin, dass der Rotor langsamer wird (d. h. außer Tritt fällt), da die Frequenz der dabei von den Permanentmagneten induzierten Spannung entsprechend abnimmt und zwar bis zum Stillstand des Rotors.

Besonders vorteilhaft ist es daher, nicht nur die Veränderung in der Frequenz als solcher, sondern auch deren Maß in Form der Frequenz und deren erster Ableitung nach der Zeit zu erfassen, um zu erkennen, wie sich die Frequenzkomponente ändert, um entsprechende Anpassungen vorzunehmen.

Die Anpassung der Frequenz und/oder der Amplitude der Klemmenspannung erfolgt dabei mit Vorteil auf einen bestimmten Betriebspunkt, so dass sich der Rotor wieder mit einer konstanten Drehzahl dreht.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Ausführungsbeispiel der Erfindung und
- Fig. 2: das Ausführungsbeispiel gemäß der Figur 1 bei der sich die Frequenz der Klemmenspannung verändert hat.

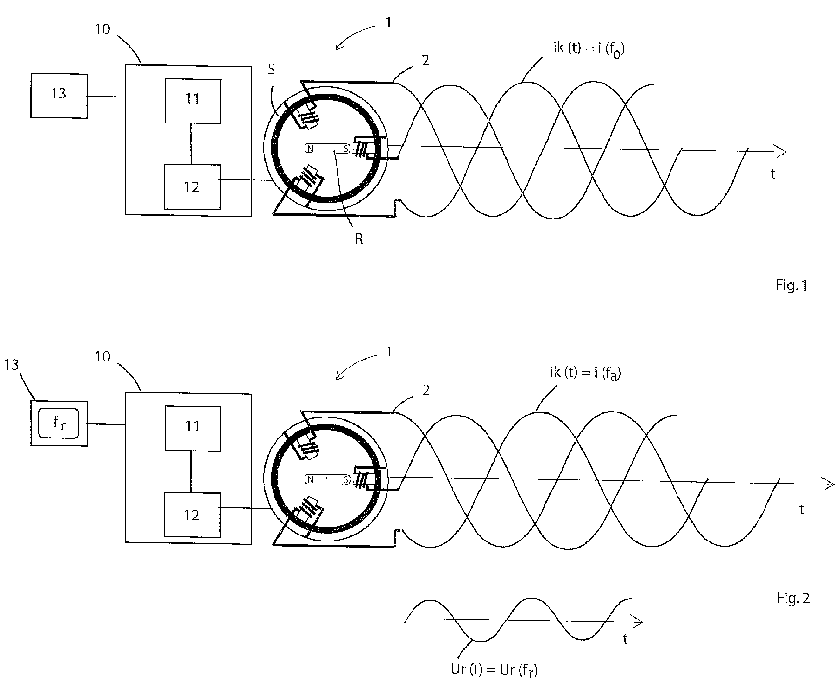

Im Folgenden wird die Erfindung mit Bezug auf die Figuren 1 und 2 näher erläutert, wobei gleiche Bezugszeichen auf gleiche strukturelle und/oder funktionale Merkmale hinweisen.

In den Figuren 1 und 2 ist jeweils eine permanenterregte Synchronmaschine 1 mit einem Rotor R und einem Stator S gezeigt. Der Stator S ist ausgebildet mit Anschlussklemmen 2 zur Anlegung einer Netzwechsel- oder Umrichterspannung mit einer Frequenz fo. Die permanenterregte Synchronmaschine 1 ist mit einer Motorsteuerung 10 ausgestattet, umfassend eine Anordnung 11 zur Erfassung des Klemmenstroms j_{K}(t) an den Anschlussklemmen 2 und deren aktuelle Frequenz fₐ. Die Motorsteuerung 10 kann den Umrichter umfassen.

Die Auswertevorrichtung 12 ist ausgebildet, um zu ermitteln, ob die aktuelle Frequenz fₐ des Klemmenstroms iₖ (t) eine Frequenzkomponente fr mit einer von der Speisefrequenz fo abweichenden und insbesondere abnehmenden Frequenz enthält.

In der Figur 2 ist ferner (lediglich beispielhaft) eine Spannungskurve der induzierten Spannung Ur(t) gezeigt, die eine niedrigere Frequenz fᵣ aufweist als die Frequenz fo, da diese die abnehmende Drehzahl der außer Tritt geratenen Synchronmaschine 1 widerspiegelt.

Ferner ist eine Anzeigevorrichtung 13 zur Anzeige einer von der Netzfrequenz fo abweichenden und/oder abnehmenden Frequenzkomponente fr vorgesehen. Die Motorsteuerung 10 passt dann abhängig von der ermittelten Frequenzkomponente fr die Frequenz und die Amplitude der Klemmenspannung an die Frequenz des Rotors R an, wenn der Motor nicht durch Netzspannung, sondern vom Umrichter gespeist wird.

## Patentansprüche

1. Permanenterregte Synchronmaschine (1) mit einem Rotor (R) und einem Stator (S) ausgebildet mit Anschlussklemmen (2) zum Anlegen einer Speisewechselspannung mit einer Speisefrequenz (f₀), wobei die permanenterregte Synchronmaschine (1) mit einer Motorsteuerung (10) umfassend eine Anordnung (11) zur Erfassung des Klemmenstroms an den Anschlussklemmen (2) und dessen aktuelle Frequenz (fₐ) ausgebildet ist, wobei ferner eine Auswertevorrichtung (12) vorgesehen ist, um zu ermitteln, ob die aktuelle Frequenz (fₐ) eine Frequenzkomponente (fᵣ) mit einer von der Speisefrequenz (f₀) abweichenden und insbesondere abnehmenden Frequenz enthält, **dadurch gekennzeichnet, dass** die Motorsteuerung (10) ausgebildet ist, abhängig von der ermittelten Frequenzkomponente (fᵣ) die Amplitude der Klemmenspannung zu verändern.

2. Permanenterregte Synchronmaschine (1) nach Anspruch 1, **dadurch gekennzeichnet, dass** eine Anzeigevorrichtung (13) zur Anzeige einer von der Speisefrequenz (f₀) abweichenden und/oder abnehmenden Frequenzkomponente (fᵣ) vorgesehen ist.

3. Permanenterregte Synchronmaschine (1) nach Anspruch 1 oder 2, **dadurch gekennzeichnet, dass** die Motorsteuerung (10) ausgebildet ist, abhängig von der ermittelten Frequenzkomponente (fᵣ) die Frequenz der Klemmenspannung zu verändern und insbesondere an die Frequenz des Rotors (R) anzupassen.

4. Permanenterregte Synchronmaschine (1) nach einem der vorhergehenden Ansprüche, **dadurch gekennzeichnet, dass** ein Umrichter zum Einspeisen der Speisewechselspannung vorgesehen ist und die Motorsteuerung (10) ausgebildet ist, abhängig von der ermittelten Frequenzkomponente (fᵣ) die Umrichterfrequenz zu verändern und insbesondere an die Frequenz des Rotors (R) anzupassen.

5. Permanenterregte Synchronmaschine (1) nach einem der vorherigen Ansprüche, **dadurch gekennzeichnet, dass** die Synchronmaschine eine einphasige Synchronmaschine ist.

6. Verfahren zum Betrieb einer permanenterregten Synchronmaschine (1) gemäß einem der Ansprüche 1 bis 5, mit den folgenden Schritten:
a. Anlegen einer Speisewechselspannung mit einer Speisefrequenz (f₀) an die Klemmen der Synchronmaschine (1),
b. Überwachen des Klemmenstroms an den Anschlussklemmen (2) und deren aktueller Frequenz (fₐ),
c. Ermitteln, ob die aktuelle Frequenz (fₐ) des Motorstroms eine Frequenzkomponente (fᵣ) mit einer von der Speisefrequenz (f₀) abweichenden und insbesondere abnehmenden Frequenz enthält.

7. Verfahren nach Anspruch 6, wobei eine Anpassung der Frequenz und/oder der Amplitude der Klemmenspannung vorgenommen wird, sobald in Schritt c) eine Frequenzkomponente (fᵣ) mit einer von der Speisefrequenz (f₀) abweichenden und insbesondere abnehmenden Frequenz detektiert wird.

8. Verfahren nach Anspruch 7, wobei die Anpassung der Frequenz und/oder der Amplitude der Klemmenspannung derart erfolgt, dass sich der Rotor mit einer konstanten Drehzahl weiter dreht.

## Claims

1. Permanently excited synchronous machine (1) having a rotor (R) and a stator (S) formed with connection terminals (2) for applying an alternating supply voltage with a supply frequency (f₀), wherein the permanently excited synchronous machine (1) is formed with a motor control (10) comprising an arrangement (11) for detecting the terminal current at the connection terminals (2) and its actual frequency (fₐ), wherein furthermore an evaluation device (12) is provided to determine whether the actual frequency (fₐ) contains a frequency component (fᵣ) with a frequency deviating and in particular decreasing from the supply frequency (f₀), **characterized in that** the motor control (10) is formed to change the amplitude of the terminal voltage depending on the determined frequency component (fᵣ).

2. Permanently excited synchronous machine (1) according to claim 1, **characterized in that** a display device (13) is provided for displaying a frequency component (fᵣ) deviating and/or decreasing from the supply frequency (f₀).

3. Permanently excited synchronous machine (1) according to claim 1 or 2, **characterized in that** the motor control (10) is formed to change the frequency of the terminal voltage depending on the determined frequency component (fᵣ) and in particular to adapt said frequency of the terminal voltage to the frequency of the rotor (R).

4. Permanently excited synchronous machine (1) according to one of the preceding claims, **characterized in that** a converter is provided for feeding in the AC supply voltage and the motor control (10) is formed to change the converter frequency depending on the determined frequency component (fᵣ) and in particular to adapt said converter frequency to the frequency of the rotor (R).

5. Permanently excited synchronous machine (1) according to one of the preceding claims, **characterized in that** the synchronous machine is a single-phase synchronous machine.

6. Method for operating a permanently excited synchronous machine (1) according to one of claims 1 to 5, comprising the following steps:
a. Applying an AC supply voltage with a supply frequency (f₀) to the terminals of the synchronous machine (1),
b. Monitoring the terminal current at the terminals (2) and their current frequency (fₐ),
c. Determine whether the current frequency (fₐ) of the motor current contains a frequency component (fᵣ) with a frequency deviating from the supply frequency (f₀) and in particular a decreasing frequency.

7. Method according to claim 6, wherein an adaptation of the frequency and/or the amplitude of the terminal voltage is carried out as soon as, in step c), a frequency component (fᵣ) having a frequency deviating from the supply frequency (f₀) and in particular a decreasing frequency is detected.

8. Method according to claim 7, wherein the adjustment of the frequency and/or the amplitude of the terminal voltage is carried out in such a way that the rotor continues to rotate at a constant rotational speed.

## Revendications

1. Machine synchrone à excitation permanente (1) avec un rotor (R) et un stator (S) réalisé avec des bornes de raccordement (2) pour l'application d'une tension alternative d'alimentation avec une fréquence d'alimentation (f₀), dans laquelle la machine synchrone à excitation permanente (1) est réalisée avec une commande de moteur (10) comprenant un agencement (11) pour la détection du courant de borne au niveau des bornes de raccordement (2) et de sa fréquence actuelle (fₐ), dans laquelle en outre un dispositif d'évaluation (12) est prévu pour déterminer si la fréquence actuelle (fₐ) contient une composante de fréquence (fᵣ) avec une fréquence différente de la fréquence d'alimentation (f₀) et en particulier décroissante,
**caractérisée en ce que** la commande de moteur (10) est réalisée pour modifier l'amplitude de la tension de borne en fonction de la composante de fréquence (fᵣ) déterminée.

2. Machine synchrone à excitation permanente (1) selon la revendication 1, **caractérisée en ce qu'**un dispositif d'affichage (13) est prévu pour l'affichage d'une composante de fréquence (fᵣ) différente de la fréquence d'alimentation (f₀) et/ou en particulier décroissante.

3. Machine synchrone à excitation permanente (1) selon la revendication 1 ou 2, **caractérisée en ce que** la commande de moteur (10) est réalisée pour modifier la fréquence de la tension de borne en fonction de la composante de fréquence (fᵣ) déterminée et l'adapter en particulier à la fréquence du rotor (R).

4. Machine synchrone à excitation permanente (1) selon l'une quelconque des revendications précédentes, **caractérisée en ce qu'**un convertisseur est prévu pour l'alimentation de la tension alternative d'alimentation et la commande de moteur (10) est réalisée pour modifier la fréquence de convertisseur en fonction de la composante de fréquence (fᵣ) déterminée et l'adapter en particulier à la fréquence du rotor (R).

5. Machine synchrone à excitation permanente (1) selon l'une quelconque des revendications précédentes, **caractérisée en ce que** la machine synchrone est une machine synchrone monophasée.

6. Procédé de fonctionnement d'une machine synchrone à excitation permanente (1) selon l'une quelconque des revendications 1 à 5, avec les étapes suivantes :
a. application d'une tension alternative d'alimentation avec une fréquence d'alimentation (f₀) aux bornes de la machine synchrone (1),
b. surveillance du courant de borne aux bornes de raccordement (2) et de leur fréquence actuelle (fₐ),
c. détermination du fait si la fréquence actuelle (fₐ) du courant de moteur contient une composante de fréquence (fᵣ) avec une fréquence différente de la fréquence d'alimentation (f₀) et en particulier décroissante.

7. Procédé selon la revendication 6, dans lequel une adaptation de la fréquence et/ou de l'amplitude de la tension de borne a lieu dès que dans l'étape c) une composante de fréquence (fᵣ) avec une fréquence différente de la fréquence d'alimentation (f₀) et en particulier décroissante est détectée.

8. Procédé selon la revendication 7, dans lequel l'adaptation de la fréquence et/ou de l'amplitude de la tension de borne se fait de sorte que le rotor continue de tourner avec une vitesse de rotation constante.
